# EUROPEAN PATENT APPLICATION

(11) **EP 4 810 899 A1**
(43) Date of publication of application: **23.09.2026**
(21) Application number: 26166570.7
(22) Date of filing: 20.03.2026
(51) Int. Cl.: G01B 11/14, F01D 11/22, G01B 15/00, F01D 17/02, F01D 21/00

(54) **MICROWAVE SENSING ARCHITECTURE FOR CLEARANCE CONTROL SYSTEM**

(30) Priority: 20.03.2025 US 202519085894
(71) Applicant: RTX Corporation, Farmington, CT 06032 (US)
(72) Inventor: AJAMI, Andre M., Palm City, 34990 (US); WOOD, Coy B., Ellington, 06029 (US); FARRIS, John R., Lebanon, 06249 (US); MCCAFFREY, Michael G., Windsor, 06095 (US); MANTESE, Joseph V., Ellington, 06029 (US); GOK, Gurkan, Milford, 06461 (US)
(74) Representative: Dehns

(57) **Abstract**

A system for sensing clearance with a turbine within a gas turbine engine (20) comprising a controller (506) configured to transmit an electromagnetic wave signal and receive a reflected electromagnetic wave signal. A waveguide (502) configured to propagate the electromagnetic wave signal from the controller (506) toward the turbine and propagate the reflected electromagnetic wave signal to the controller (506). A blade outer air seal (BOAS) (66) defining a window (608) therein through which the electromagnetic wave signal passes and through which the reflected electromagnetic wave signal passes.

## Description

### TECHNICAL FIELD

This disclosure relates generally to detection of distances between blade outer air seals and blade tips of a turbine within a gas turbine engine. More specifically, this disclosure relates to detecting distances between blade outer air seals and blade tips of a turbine within a gas turbine engine using microwave sensors.

### BACKGROUND

Turbine clearance control systems are currently performed using open-loop schedules based on expected thermal response of turbine materials. This direct measurement of clearance enables direct measurement and allows for rapid, robust measurement and a closed-loop control system that actively controls clearance based on any condition. However, the sensors used for detecting the distances between components are often required to operate within highly challenging operating environments that can cause degradation of the sensors. Thus, there is a need for a system that detects turbine clearance in a manner that does not require sensors needing to be frequently replaced.

### SUMMARY

This disclosure relates to a system for detecting clearance between blade outer air seals and blade tips of a turbine within a gas turbine engine.

In an aspect of the present invention, a system for sensing clearance with a turbine within a gas turbine engine includes a controller configured to transmit an electromagnetic wave signal and receive a reflected electromagnetic wave signal, a waveguide configured to propagate the electromagnetic wave signal from the controller toward the turbine and propagate the reflected electromagnetic wave signal to the controller, and a blade outer air seal (BOAS) defining a window therein through which the electromagnetic wave signal passes and through which the reflected electromagnetic wave signal passes.

Any single one or any combination of the following features may be used with the examples above. The system where the waveguide further may include a first portion at a first end of the waveguide configured to enable the waveguide to be secured to a diffuser case of the gas turbine engine, a second portion at a second end of the waveguide configured to project the electromagnetic wave signal toward the turbine and receive the reflected electromagnetic wave signal from the turbine and a body interconnecting the first portion with the second portion, where the body, the first portion and the second portion are further configured to define a passageway to enable propagation of the electromagnetic wave signal and the reflected electromagnetic wave signal therethrough. The window defined within the BOAS further may include a dielectric window configured to enable a passage of the electromagnetic wave signal and the reflected electromagnetic wave signal therethrough. The BOAS is configured to move between a plurality of positions to adjust a clearance between the BOAS and the turbine of the gas turbine engine, the BOAS further defining a chamber containing the second end of the waveguide above the window such that the BOAS can move between the plurality of positions about the second end of the waveguide. The controller is configured to control movement of the BOAS responsive to the reflected electromagnetic wave signal. The waveguide is configured to remain in a fixed position while the BOAS moves with respect to a central axis of the waveguide. The first end of the waveguide is connected within an electromechanical actuator of the BOAS. The system may include a plurality of waveguides each connected to the controller and configured to propagate the electromagnetic wave signal from the controller toward the turbine and propagate the reflected electromagnetic wave signal from the turbine to the controller.

In another aspect of the present invention, a method for sensing clearance with a turbine within a gas turbine engine includes transmitting an electromagnetic wave signal to a waveguide from a controller, receiving a reflected electromagnetic wave signal from the waveguide at the controller, propagating the electromagnetic wave signal from the controller toward the turbine through the waveguide in a first direction, propagating the reflected electromagnetic wave signal through the waveguide to the controller in a second direction, and defining a window within a blade outer air seal (BOAS) through which the electromagnetic wave signal passes and through which the reflected electromagnetic wave signal passes.

Any single one or any combination of the following features may be used with the examples above. The method may include securing a first portion at a first end of the waveguide to a diffuser case of the gas turbine engine, projecting the electromagnetic wave signal toward the turbine using a second portion at a second end of the waveguide, receiving the reflected electromagnetic wave signal from the turbine at the second portion of the second end of the waveguide, and enabling propagation of the electromagnetic wave signal and the reflected electromagnetic wave signal through a passageway defined within a body interconnecting the first portion with the second portion of the waveguide. The step of defining further may include defining a dielectric window within the BOAS configured to enable a passage of the electromagnetic wave signal and the reflected electromagnetic wave signal therethrough. The method may include moving the BOAS between a plurality of positions to adjust a clearance between the BOAS and the turbine of the gas turbine engine and defining a chamber within the BOAS for containing the second end of the waveguide above the window such that the BOAS can move between the plurality of positions about the second end of the waveguide. The method may include controlling movement of the BOAS responsive to the reflected electromagnetic wave signal using the controller. The method may include maintaining the waveguide in a fixed position while the BOAS moves with respect to a central axis of the waveguide. The method may include determining timing of passage of turbine blade tips past the waveguide responsive to reflected electromagnetic wave signal from the turbine. The method further may include connecting a plurality of waveguides to the controller, propagating the electromagnetic wave signal from the controller toward the turbine through each of the plurality of waveguides, and propagating a plurality of reflected electromagnetic wave signals from the turbine to the controller.

In another aspect of the present invention, an apparatus for sensing clearance with a turbine within a gas turbine engine includes a microwave waveguide configured to propagate a microwave signal from a controller toward the turbine and propagate a reflected microwave signal to the controller, an input at a first end of the microwave waveguide for receiving the microwave signal from the controller, and an output at a second end of the microwave waveguide for projecting the microwave signal toward the turbine of the gas turbine engine and receiving the reflected microwave signal from the turbine of the gas turbine engine.

Any single one or any combination of the following features may be used with the examples above. The apparatus where the microwave waveguide further may include a first portion at the first end of the microwave waveguide configured to enable the microwave waveguide to be secured to a diffuser case of the gas turbine engine, a second portion at the second end of the microwave waveguide configured to project the microwave signal toward the turbine and receive the reflected microwave signal from the gas turbine and a body interconnecting the first portion with the second portion, where the body, the first portion and the second portion are further configured to define a passageway to enable propagation of the microwave signal and the reflected microwave signal therethrough. The microwave waveguide is contained within a chamber defined within a BOAS, the second end configured to move within the chamber of the BOAS between a plurality of positions. The microwave waveguide is configured to remain in a fixed position while a BOAS associated with the microwave wave guide moves with respect to a central axis of the microwave waveguide.

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts:
FIGURE 1 illustrates a partial cross-sectional view of a gas turbine engine, in accordance with various embodiments;
FIGURE 2 illustrates a partial cross-sectional view of a rotor assembly, in accordance with various embodiments;
FIGURE 3 illustrates a partial cross-sectional view of an embodiment of a blade outer air seal assembly;
FIGURE 4 illustrates a partial cross-sectional view of a blade outer air seal assembly, in accordance with various embodiments;
FIGURE 5 illustrates a block diagram of the interconnection of a waveguide and blade outer air seals using a controller;
FIGURE 6 illustrates a microwave sensor installed with respect to blade outer air seals;
FIGURE 7 illustrates a single microwave sensor installed with respect to multiple blade outer air seals installed on a diffuser case;
FIGURE 8 illustrates the movement of a blade outer air seal with respect to a microwave sensor; and
FIGURE 9 illustrates the operation of a microwave sensor with respect to a target such as a blade tip of a turbine.

### DETAILED DESCRIPTION

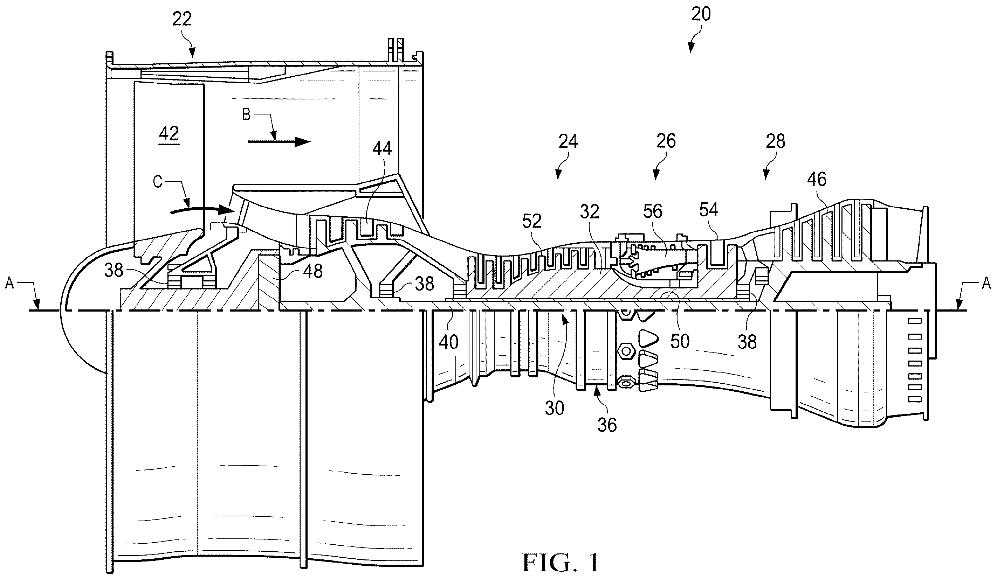

FIGURES 1 through 9, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

Referring now to FIGURE 1, a cross-sectional schematic view of a gas turbine engine 20 is illustrated, in accordance with various embodiments. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low-speed spool 30 and a high-speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low-speed spool 30 generally includes an inner shaft 40 that interconnects a fan 42, a low-pressure compressor 44 and a low pressure turbine 46. The inner shaft 40 is connected to the fan 42 through a speed change mechanism, which in exemplary gas turbine engine 20 is illustrated as a gear system 48 to drive the fan 42 at a lower speed than the low-speed spool 30. The high-speed spool 32 includes an outer shaft 50 that interconnects a high-pressure compressor 52 and high-pressure turbine 54. A combustor 56 is arranged in exemplary gas turbine engine 20 between the high-pressure compressor 52 and the high-pressure turbine 54. An engine static structure 36 is arranged generally between the high-pressure turbine 54 and the low-pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low-pressure compressor 44 then the high-pressure compressor 52, mixed and burned with fuel in the combustor 56, then expanded over the high-pressure turbine 54 and low-pressure turbine 46. The turbines 46, 54 rotationally drive the respective low speed spool 30 and high-speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high bypass geared aircraft engine. In a further example, the engine 20 bypass ratio is greater than about six (6), with an example embodiment being greater than about ten (10), the gear system 48 is an epicyclic gear train, such as a planetary gear system or other gear system, with a gear reduction ratio of greater than about 2.3 and the low-pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The gear system 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

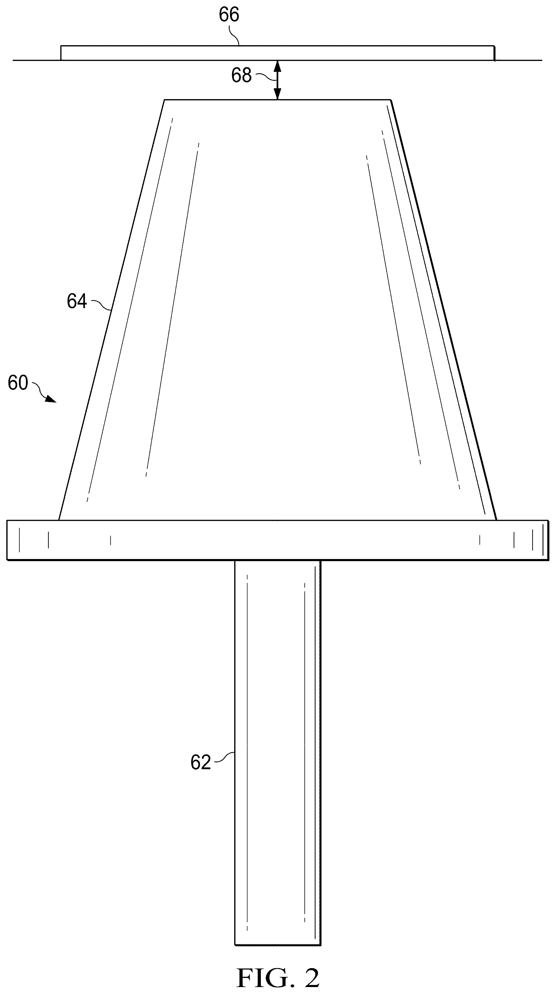

Referring now to FIGURE 2, a partial cross-section of a rotor 60, (e.g., a rotor of the high-pressure turbine 54) is illustrated, in accordance with various embodiments. One skilled in the art, however, will appreciate that the present disclosure may be readily applied to other rotors of the gas turbine engine 20, for example, the low-pressure turbine 46, the low-pressure compressor 44, or the high pressure compressor 52. The rotor 60 includes a rotor disc 62 and a plurality of rotor blades 64 extending radially outwardly from the rotor disc 62. The rotor 60 is configured to rotate about the engine central longitudinal axis A. The rotationally stationary structure surrounding the rotor 60 includes a plurality of blade outer air seals (BOAS) 66. The BOAS 66 at least partially defines a blade clearance 68 between the plurality of rotor blades 64 and the BOAS 66. It is also true that one or more sense points may be shown along the tip or displaced from the first point of detection into the plane of the figure and along the length.

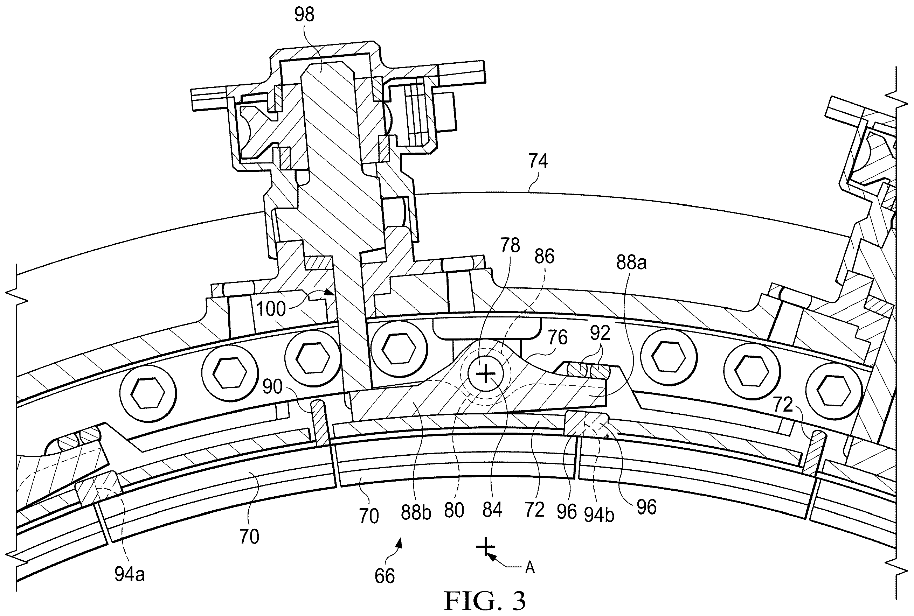

Referring now to FIGURE 3, a cross-sectional view of a BOAS 66 configuration is illustrated. The BOAS 66 includes a plurality of BOAS segments 70 arrayed circumferentially around the engine central longitudinal axis A. While the embodiment of FIGURE 3 includes 30 BOAS segments 70, that number is merely exemplary and other quantities of BOAS segments 70 may be utilized. The BOAS segments 70 are retained in BOAS carriers 72 located radially outboard of the BOAS segments 70. In some embodiment, such as illustrated, each BOAS carrier 72 has two BOAS segments 70 secured thereto, while in other embodiments each BOAS carrier 72 may carry, for example, one or three BOAS segments 70. The BOAS carriers 72 are movably retained in a case member 74 located radially outboard of the BOAS carriers 72, so that the BOAS carriers 72 and thus the BOAS segments 70 are movable in a radial direction.

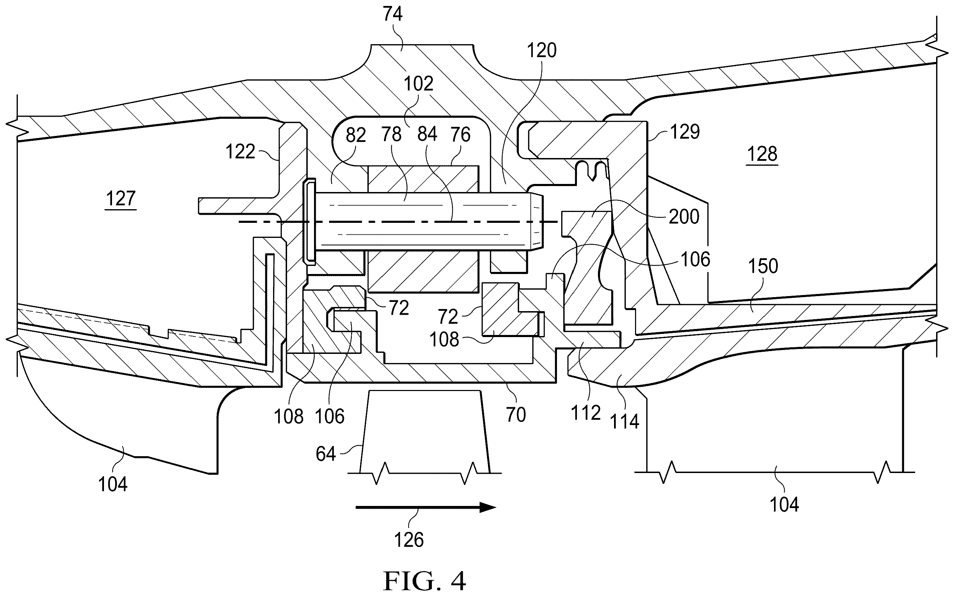

To effect movement of the BOAS segments 70, the BOAS carriers 72 are operably connected to a plurality of adjustment levers 76 secured to the case member 74. The adjustment levers 76 are each retained at the case member 74 via a pin 78 extending through a lever pivot 80 and a casing flange 82, best shown in FIGURE 4. The pin 78 defines a lever axis 84 about which the adjustment lever 76 is rotatable. The pin 78, in this example, has a shoulder which engages a recess in casing flange 82 coupled with the cover plate 122, which both, combined, prevent relative motion of the pin 78 along lever axis 84. Referring again now to FIGURE 3, the adjustment lever 76 has a hub portion 86 through which the pin 78 extends and two lever arms 88 extending opposite circumferential directions from the hub portion 86. The BOAS carriers 72 each have a carrier body 90 which supports the BOAS segments 70 and carrier flanges 92 at each circumferential end 94a, 94b of the BOAS carrier 72. The carrier flanges 92 extend radially outwardly from the carrier body 90 and each include a flange opening 96, such as a slot or hole through which a first lever arm 88a extends. As illustrated in FIGURE 3, the first lever arm 88a extends through flange openings 96 of two circumferentially adjacent BOAS carriers 72. In operation, rotation of the adjustment lever 76 about the lever axis 84 moves the BOAS carriers 72 radially inwardly and outwardly depending on the direction of the rotation, and thus likewise adjusts a radial position of the BOAS segments 70. Because each first lever arm 88a extends through flange openings 96 of two adjacent BOAS carriers 72, operation of each adjustment lever 76 actuates two circumferentially adjacent BOAS carriers 72.

The rotation of the adjustment lever 76 is driven and controlled by an electromechanical actuator 98 operably connected to the adjustment lever 76. In various embodiments, such as that illustrated in FIGURE 3, the electromechanical actuator 98 is a high-force, short-stroke linear electromechanical actuator 98 positioned such that the actuator piston 100 contacts a second lever arm 88b of the adjustment lever 76. The force exerted on the second lever arm 88b by the actuator piston 100 drives rotation of the adjustment lever 76 about the lever axis 84, thus urging radial movement of, and controlling the position of the BOAS segments 70. The use of a lever increases the stroke length of the electromechanical actuator 98 versus the relative motion of the BOAS segments 70. This improves the position control of the BOAS segment 70 because the larger stroke of the actuator enables more precision in the measurement system within the electromechanical actuator 98 and reduces the size and weight of the electromechanical actuator 98 for a given BOAS segment 70 load. While a linear electromechanical actuator 98 arrangement is utilized in the embodiment of FIGURE 3, one skilled in the art will readily appreciate that this is merely exemplary and that other types of actuators may be utilized in other embodiments.

Referring to FIGURE 4, the aerodynamic design of turbines typically specifies the smallest possible axial spacing between adjacent rows of blades 64 and stator vane 104 to improve performance and reduce weight. Thus, the axial spacing between adjacent stator vane 104 components is also minimized and results in relatively minimal axial space for the BOAS segments 70, BOAS carriers 72, and adjustment lever 76.

Referring again to FIGURE 4, the adjustment levers 76, the pin 78, and the BOAS carriers 72 are located axially in a common cavity 102 defined in the case member 74 between axially adjacent stator vane 104 components. More particularly, the common cavity 102 is defined in part by the casing flange 82 and an aft flange 120 located rearward of the casing flange 82. The adjustment lever 76 is located between the casing flange 82 and the aft flange 120, with the pin 78 extending through both the casing flange 82 and the aft flange 120 and the adjustment lever 76 to retain the adjustment lever 76. In various embodiments, a cover plate 122 is located axially upstream of the casing flange 82, covering the casing flange 82 and the pin 78 to improve isolation and sealing from the upstream pressure cavity 127 into the common cavity 102.

In various embodiments, a seal 200 is located in the common cavity 102 at, for example, an interface of the aft segment hooks 106 and a vane platform leg 129 of a vane 150, to improve isolation and sealing to the downstream pressure cavity 128. It should be understood that the total air pressure within upstream pressure cavity 127 is greater than flow path 126 and the common cavity 102. Additionally, the pressure within common cavity 102 is greater than the downstream pressure cavity 128. Leakage losses reduce performance of the engine 20, and the inclusion of elements such as the cover plate 122 and the seal 124 further improves sealing and prevents leakage from the higher pressure within the common cavity 102 into the relatively lower pressure flow path 126. This compact structure in which the adjustment mechanism components are located in the same common cavity 102 reduces potential leakage points and reduces the impact of the adjustment structure on the overall engine 20 configuration and minimizes the fluid leakage resulting from inclusion of the adjustment structure.

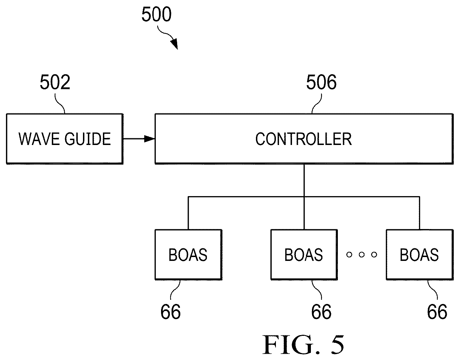

Referring now to FIGURE 5, there is illustrated the manner in which a microwave sensor 500 may be paired with BOAS 504 in order to control their movement. While the following discussion is made with respect to the use of microwave waveguides and microwave signals, it will be appreciated that any electromagnet wave signal and electromagnetic waveguide may be utilized. The electromagnetic signal may be of a wavelength in the frequency range of 1GHz to 1 THz, with 10GHz to 500 THz preferred, and 40 GHz to 250 GHz more preferred. The microwave sensor 500 comprises a plurality of microwave waveguides 502 that are interconnected with a controller 506. The plurality of waveguides 502 that are placed in various locations within the BOAS 504 there are also connected to the controller 506 and each comprise a separate interrogation point for the overall microwave sensor 500. The controller 506 will transmit a microwave signal that is propagated down the microwave waveguide 502 toward the blades of the turbine that are rotating within the BOAS 504. The microwave signal will reflect off of the tips of the blades rotating pass the microwave waveguide 502 and be transmitted back to the controller 506. These reflections can be analyzed by the controller 506 and used to determine the clearance between the tips of the fan blades along with their rotational speed and velocity within the turbines and the BOAS 504. The total reflection is transmitted back to the controller 506 which may then measure the magnitude and phase characteristics of the electromagnetic wave that is reflected from the blade tip. This process utilizes a single frequency, continuous wave operation. The magnitude and phase of the reflected wave defines the position of the blade with respect to the aperture in the horn end 902. The magnitude and phase characteristics may then be converted into a distance between the aperture and the blade tip of the turbine.

While the above description has been made to detecting clearances between turbine fan blades and the BOAS 66, it should be appreciated that the microwave waveguide may also be used to detect clearance between the BOAS 66 and other rotating parts of the gas turbine engine such as the compressors and fans. Furthermore, while the description is made with respect to the transmission of microwave signals through a microwave waveguide, the use of signals in other frequency ranges and waveguides operating in other frequency ranges may be used in a similar fashion.

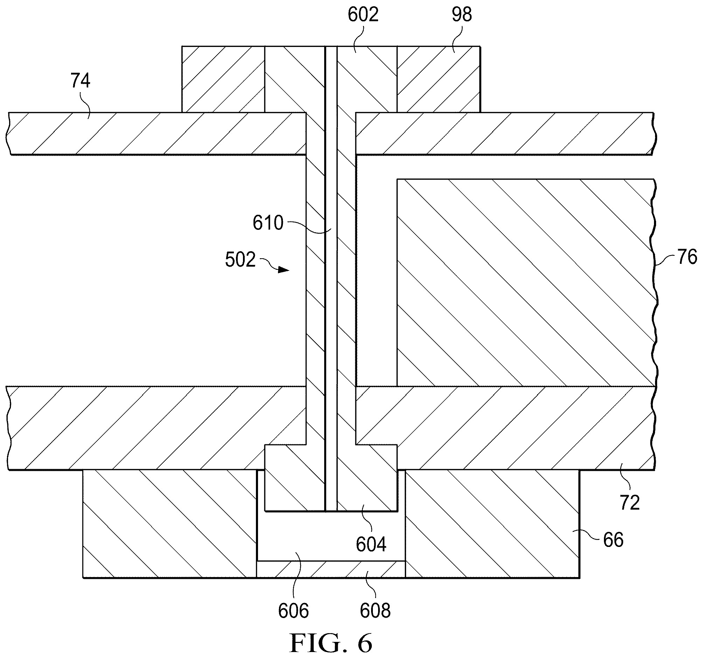

Referring now to FIGURE 6, there is illustrated the microwave waveguide 502 installed with the BOAS 66. The BOAS 66 are moved between positions using the lever 76. The BOAS 66 are supported by a BOAS carrier 72 as described herein above. The carrier lever 76 and BOAS 66 are mounted below the diffuser case member 74. The microwave waveguide 502 includes an upper cylindrical portion 602 that is configured to fit within and be secured to the electromechanical actuator 98. It will be appreciated that the upper cylindrical portion could be secured to any part of the engine. A lower cylindrical portion 604 is configured to be inserted within the BOAS 66. The upper cylindrical portion 602 is fixed to the electromechanical actuator 98. The lower cylindrical portion 604 slidably engages within a chamber 606 defined within the BOAS 66. Thus, the BOAS 66 may slide up and down with respect to the lower cylindrical portion 604 of the microwave waveguide 502 along a central axis of the microwave waveguide 502. The BOAS 66 also define an opening into which a quartz or dielectric window 608 may be placed such that signals emitted from the microwave waveguide 502 may pass when reflecting off of the blade tips of the turbines. Other types of materials may be utilized that are transparent to microwaves or other types of electromagnetic signals. The microwave waveguide 502 additionally defines a passageway 610 down the central axis of the microwave waveguide 502 to enable propagation of signals back and forth along the microwave waveguide.

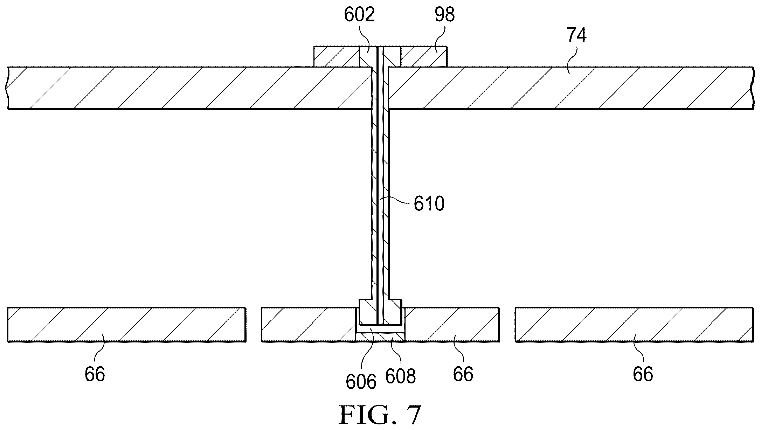

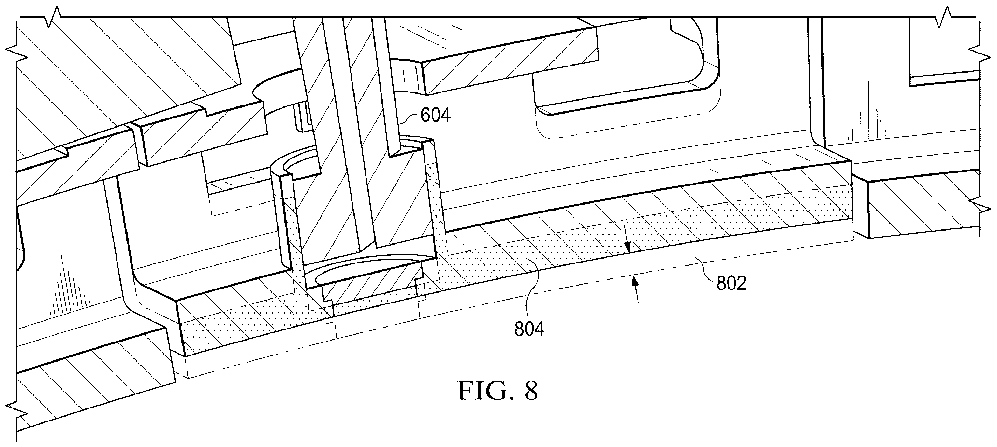

Referring now to FIGURES 7 and 8, there is more particularly illustrated the structure of a waveguide 502 mounted with respect to multiple BOAS 66 beneath the diffuser case member 74. Additionally, FIGURE 8 illustrates the movement of the BOAS 66 with respect to the lower cylindrical portion 604 of the microwave waveguide 502. The BOAS 66 may move generally between a position illustrated generally at 802 when maximally extended toward the fan blades of the turbine to a position illustrated generally at 804 when the BOAS 66 are retracted fully. The controller 506 will know the position of the BOAS 66 based upon the provided control signals emitted from the waveguide 502 that reflect from the blade tip of the turbines will enable a determination of the clearance between the blade tips and the bottom surface of the BOAS 66.

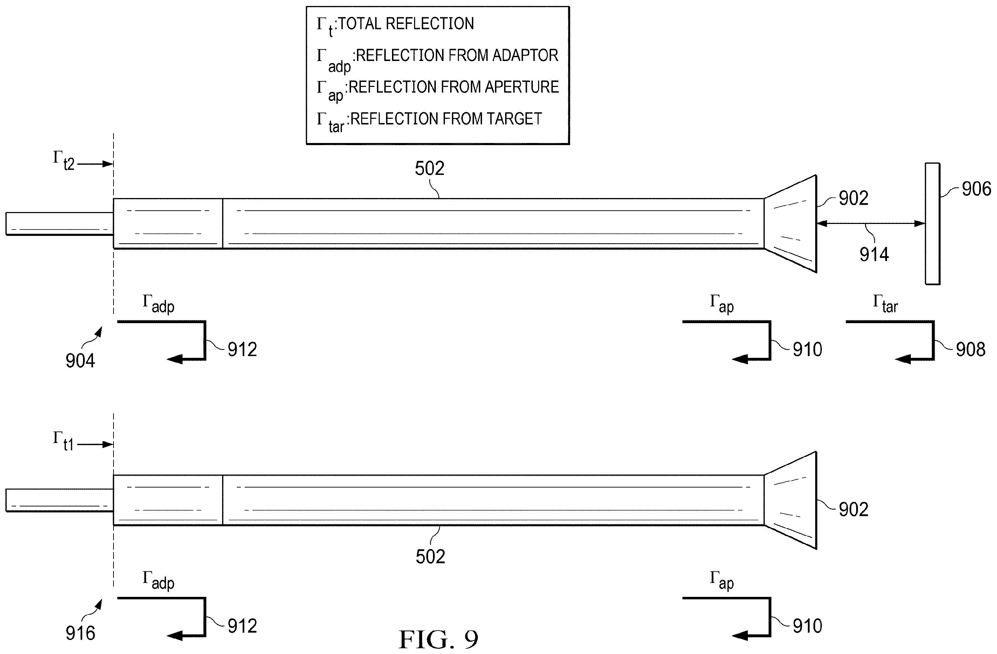

This operation is more particularly illustrated in FIGURE 9. FIGURE 9 illustrates two examples wherein the BOAS 66 are moved between positions using the lever 76. The BOAS 66 are supported by a BOAS carrier 72 as described herein above. The carrier 72, lever 76 and BOAS 66 are mounted below the diffuser case member 74. Microwave waveguide 502 is transmitting a signal down the length of the microwave waveguide to be emitted from the horn end 902 thereof. In the first instance shown generally at 904, the microwave signal transmitted from the horn end 902 will reflect from the target 906 as a reflection as target signal 908. There will be similar signal reflections from the horn aperture and the adapter 912 through which the waveguide 502 is connected to the controller 506. In the case where the signal reflects from the target 906, the total reflection will consist of the target reflection 908, the aperture reflection 910 and the adapter reflection 912. This will enable a termination of the distance D 914 between the aperture of the horn end 902 and the target 906. Similarly, as shown generally at 916 when the signal does not reflect from the target 906 because no target is present at the opening of the waveguide 502, the total reflection will be represented by the aperture reflection 910 and the adapter reflection 912. This will enable a determination that no target 906 (i.e. the blade tip of a turbine) is present outside the waveguide 502 horn end 902. The presence and absence of a target that reflects the microwave signal can be used for determining timing of passage of turbine blade tips past the microwave waveguide 502 responsive to reflected microwave signal from the turbine blade tips. The detection of the presence and absence of blades is referred to as tip timing. Tip timing is the time between tip passage of the individual blades. This is determined directly from the sensing of the reflected signals.

Since the waveguide 502 includes no electronics or moving parts, the waveguide will not normally be integrated by normal operating conditions of the aircraft engine as would electronic components. The use of the waveguide 502 additionally enables the actual electronic components such as the controller 506 that makes the distance determination between the BOAS 66 and the tips of the turbine blades to be made at a location away from the waveguide 502 in a presumably less operationally degrading operational location of the engine. This will enable continuous clearance control during the life of the engine with the prolonged deterioration seen by the waveguide 502.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A system for sensing clearance with a turbine within a gas turbine engine (20), comprising:
a controller (506) configured to transmit an electromagnetic wave signal and receive a reflected electromagnetic wave signal;
a waveguide (502) configured to propagate the electromagnetic wave signal from the controller (506) toward the turbine and propagate the reflected electromagnetic wave signal to the controller (506); and
a blade outer air seal (BOAS) (66) defining a window (608) therein through which the electromagnetic wave signal passes and through which the reflected electromagnetic wave signal passes.

2. The system of Claim 1, wherein the waveguide (502) further comprises:
a first portion (602) at a first end of the waveguide (502) configured to enable the waveguide (502) to be secured to a diffuser case (74) of the gas turbine engine (20);
a second portion (604) at a second end of the waveguide (502) configured to project the electromagnetic wave signal toward the turbine and receive the reflected electromagnetic wave signal from the turbine; and
a body interconnecting the first portion (602) with the second portion (604), wherein the body, the first portion (602) and the second portion (604) are further configured to define a passageway (610) to enable propagation of the electromagnetic wave signal and the reflected electromagnetic wave signal therethrough.

3. The system of Claim 1 or 2, wherein the window (608) defined within the BOAS (66) further comprises a dielectric window (608) configured to enable a passage of the electromagnetic wave signal and the reflected electromagnetic wave signal therethrough.

4. The system of Claim 1, 2 or 3, wherein the BOAS (66) is configured to move between a plurality of positions to adjust a clearance between the BOAS (66) and the turbine of the gas turbine engine (20), the BOAS (66) further defining a chamber (606) containing a second end of the waveguide (502) above the window (608) such that the BOAS (66) can move between the plurality of positions about the second end of the waveguide (502).

5. The system of any preceding claim, wherein the controller (506) is configured to control movement of the BOAS (66) responsive to the reflected electromagnetic wave signal.

6. The system of any preceding claim, wherein the waveguide (502) is configured to remain in a fixed position while the BOAS (66) moves with respect to a central axis of the waveguide (502), and/or wherein a first end of the waveguide (502) is connected within an electromechanical actuator (98) of the BOAS (66).

7. The system of any preceding claim further comprising a plurality of waveguides (502) each connected to the controller (506) and configured to propagate the electromagnetic wave signal from the controller (506) toward the turbine and propagate the reflected electromagnetic wave signal from the turbine to the controller (506).

8. A method for sensing clearance with a turbine within a gas turbine engine (20), comprising:
transmitting an electromagnetic wave signal to a waveguide (502) from a controller (506);
receiving a reflected electromagnetic wave signal from the waveguide (502) at the controller (506);
propagating the electromagnetic wave signal from the controller (506) toward the turbine through the waveguide (502) in a first direction;
propagating the reflected electromagnetic wave signal through the waveguide (502) to the controller (506) in a second direction; and
defining a window (608) within a blade outer air seal (BOAS) (66) through which the electromagnetic wave signal passes and through which the reflected electromagnetic wave signal passes.

9. The method of Claim 8 further comprising:
securing a first portion (602) at a first end of the waveguide (502) to a diffuser case (74) of the gas turbine engine (20);
projecting the electromagnetic wave signal toward the turbine using a second portion (604) at a second end of the waveguide (502);
receiving the reflected electromagnetic wave signal from the turbine at the second portion (604) of the second end of the waveguide (502); and
enabling propagation of the electromagnetic wave signal and the reflected electromagnetic wave signal through a passageway (610) defined within a body interconnecting the first portion (602) with the second portion (604) of the waveguide (502).

10. The method of Claim 8 or 9, wherein the step of defining further comprises defining a dielectric window (608) within the BOAS (66) configured to enable a passage of the electromagnetic wave signal and the reflected electromagnetic wave signal therethrough.

11. The method of Claim 8, 9 or 10 further comprising:
moving the BOAS (66) between a plurality of positions to adjust a clearance between the BOAS (66) and the turbine of the gas turbine engine (20); and
defining a chamber (606) within the BOAS (66) for containing a second end of the waveguide (502) above the window (608) such that the BOAS (66) can move between the plurality of positions about the second end of the waveguide (502).

12. The method of any of Claims 8 to 11 further comprising controlling movement of the BOAS (66) responsive to the reflected electromagnetic wave signal using the controller (506).

13. The method of any of Claims 8 to 12 further comprising maintaining the waveguide (502) in a fixed position while the BOAS (66) moves with respect to a central axis of the waveguide (502).

14. The method of any of Claims 8 to 13, further comprising determining timing of passage of turbine blade tips past the waveguide (502) responsive to reflected electromagnetic wave signal from the turbine.

15. The method of any of Claims 8 to 14 further comprises:
connecting a plurality of waveguides (502) to the controller (506);
propagating the electromagnetic wave signal from the controller (506) toward the turbine through each of the plurality of waveguides (502); and
propagating a plurality of reflected electromagnetic wave signals from the turbine to the controller (506).
